# EUROPÄISCHE PATENTSCHRIFT

(11) **EP 2 244 869 B1**
(45) Veröffentlichungstag und Bekanntmachung des Hinweises auf die Patenterteilung: **17.04.2013**
(21) Anmeldenummer: 09702895.5
(22) Anmeldetag: 07.01.2009
(51) Int. Cl.: B29B 9/10, B01J 2/04, C08J 3/12, B01J 2/06

(54) **VERTROPFUNGSVORRICHTUNG UND VERFAHREN ZU DEREN BETRIEB**
DRIPPING DEVICE AND METHOD FOR THE OPERATION THEREOF
DISPOSITIF DE FORMATION DE GOUTTELETTES ET PROCÉDÉ POUR LE FAIRE FONCTIONNER

(30) Priorität: 16.01.2008 DE 102008004692
(43) Veröffentlichungstag der Anmeldung: 03.11.2010
(73) Patentinhaber: Automatik Plastics Machinery GmbH, 63762 Grossostheim (DE)
(72) Erfinder: DAHLHEIMER, Stefan, 63801 Kleinostheim (DE); DEISS, Stefan, 55896 Harxheim (DE); GLÖCKNER, Frank, 63739 Aschaffenburg (DE); KAMPFMANN, Burkard, 63776 Mömbris (DE)
(74) Vertreter: Spranger, Stephan
(86) Internationale Anmeldenummer: PCT/EP2009/000042
(87) Internationale Veröffentlichungsnummer: WO 2009/090006

(56) Entgegenhaltungen:
- WO-A-2007/128521
- DE-A1- 4 214 272
- DE-A1- 19 617 924
- GB-A- 1 126 743
- GB-A- 1 588 467
- US-A1- 2002 182 279

## Beschreibung

Die Erfindung betrifft eine Vertropfungsvorrichtung zur Herstellung von Granulatkömem aus einer niedrigviskosen Kunststoffschmelze, z.B. aus Polyamid 6 oder Copolyamiden, gemäß dem Oberbegriff des Anspruchs 1 sowie ein entsprechendes Herstellungsverfahren gemäß dem Oberbegriff des Anspruchs 18.

Niedrigviskose Kunststoffmaterialien, z.B. Polyamide, finden heute in einer Vielzahl von Gebieten Anwendung, zum Beispiel für Textilien, Teppiche oder Reifencords, bei der Herstellung von Spritzgussteilen, zum Beispiel im Kraftfahrzeugbereich, oder bei der Herstellung von Folien oder Hohlkörpern für den Verpackungsbereich. Dabei ist besonders die Vielzahl von positiven Eigenschaften von Bedeutung, zum Beispiel die hohe Zähigkeit und hohe Temperaturfestigkeit kombiniert mit guter Elastizität solcher Materialien.

Ein Überblick über verschiedene Verfahren zur Herstellung von Polyamiden, zum Beispiel von Polyamid 6 oder von Copolyamiden auf Basis von Caprolactam, wird im Kunststoff-Handbuch, Band 3 "Technische Thermoplaste", Teilband 4 "Polyamide", herausgegeben von G. W. Becker und D. Braun, Hanser-Verlag München und Wien, 1998, Seiten 22 bis 75 gegeben.

Generell können Granulatkömer aus einer niedrigviskosen Kunststoffschmelze mittels einer Vertropfungsvorrichtung hergestellt werden, wobei in einem Vertropfungskopf mit einer Gießerdüse ein Ausgleichsraum mit unter Druck stehendem Gas gefüllt ist und die Vertropfungsvorrichtung in ihrem unteren Bereich ein Granulatkörner-Tropfen auffangendes Bad aufweist mit einem unter Druck stehenden Prozessfluid. Die Kunststoffschmelze wird durch die Gießerdüse mit Bohrungen im oberen Bereich der Vertropfungsvorrichtung gedrückt, so dass die Kunststoffschmelze, welche mit einer harmonischen Druckschwingung beaufschlagbar ist, Granulatkömer-Tropfen ausbildet, welche eine Fallstrecke durchfallen, bevor sie in das Prozessfluidbad eintauchen.

Ein allgemeiner Aufbau einer Vertropfungsvorrichtung ist beispielsweise im einleitenden Teil der deutschen Offenlegungsschrift DE 10 2006 022 555 A1 kurz erläutert ohne näher auf das Vertropfen einzugehen, da dort technische Problemlösungen bezüglich der Behandlung eines Prozessfluids behandelt werden.

Nun ergeben sich gerade bei der Vertropfung von niedrigviskoser Kunststoffschmelze besondere Probleme dadurch, dass zum einen ein Aufschäumen der Granulatkömer bzw. der fallenden Granulatkömer-Tropfen aufgrund der in der Kunststoffschmelze enthaltenen flüchtigen Stoffe zuverlässig vermieden werden soll und zum anderen auch dafür Sorge zu tragen ist, dass die Granulatkömer eine möglichst kugelförmige Form erhalten und auch beibehalten, da dies für die weitere Verarbeitung von entscheidender Bedeutung ist. Gerade aber bei Granulatkömem bzw. Granulatkömer-Tropfen aus niedrigviskoser Kunststoffschmelze besteht das Problem, dass aufgrund der niedrigen Viskosität des Materials leicht Verformungen der Kömer/Tropfen auftreten können. Ferner neigen gerade Granulatkömer aus niedrigviskoser Kunststoffschmelze dazu, besonders leicht zu verkleben, was ebenfalls zuverlässig verhindert werden sollte.

Eine einzelne Lösung zur Behebung eines einzelnen Teilaspekts der oben angesprochenen Probleme wird im Stand der Technik bereits angedacht.

So betrifft die deutsche Offenlegungsschrift DE 43 38 212 A1 eine Vertropfungsvorrichtung, bei welcher das dortige Kunststoffmaterial in fließfähiger Konsistenz einer Kühlflüssigkeit zugeführt wird. Dabei soll ein Verformen der Tropfen beim Eintreten in die Kühlflüssigkeit dadurch vermieden werden, dass in einem offenen Auffanggefäß eine aufwändige pilzförmig ausgebildete konvexen Flüssigkeitsverteileinrichtung koaxial zur Düseneinrichtung angeordnet ist, die oberflächlich mit einer Flüssigkeitsschicht bedeckt ist, in welche die jeweiligen Tropfen aus Kunststoff fallen. Es handelt sich dabei um ein zur Umgebung offenes System ohne zusätzliche Druckbeaufschlagung aber mit einer Abführung der Kühlflüssigkeit entlang der Kühlstrecke über eine schräg nach unten seitlich abfallend angeordnete Ablaufwanne, was die Anordnung in einem Druckbehälter ausschließt.

Die bereits genannte deutsche Offenlegungsschrift DE 10 2006 022 555 A1 betrifft lediglich die spezifische Handhabung des dortigen unter Druck stehenden Prozessfluids, in welches die dortige Kunststoffschmelze granuliert wird. Spezifische Problematiken des Vertropfens niedrigviskoser Kunststoffschmelze werden dort nicht behandelt und spielen dort auch gar keine Rolle.

Bestehende Problemlösungen behandeln also allenfalls nur die Problematik des Ausgasens oder die Problematik der Formstabilität und betreffen auch nicht explizit Vorrichtungen, welche speziell zur Herstellung von Granulatkömern aus niedrigviskoser Kunststoffschmelze gestaltet sind.

Die internationale Veröffentlichungsschrift WO 2007/128521 A2 beschreibt ein Verfahren gemäß dem Oberbegriff des Anspruchs 1 zur kontinuierlichen Herstellung von Polyamid-Granulat, bei welchem eine niedrigviskose Polyamidschmelze direkt vertropft wird unter Aufrechterhaltung eines Drucks, welcher dem Dampfdruck des in der Polyamidschmelze enthaltenen Wassers mindestens entspricht, sowie eine Vorrichtung gemäß dem Oberbegriff des Anspruchs 18.

Es ist daher die Aufgabe der vorliegenden Erfindung, eine Vertropfungsvorrichtung zur Herstellung von Granulatkömem aus einer niedrigviskosen Kunststoffschmelze sowie ein entsprechendes Herstellungsverfahren vorzusehen, welche(s) die Nachteile des Standes der Technik überwindet, und insbesondere eine Vorrichtung bzw. ein Verfahren vorzusehen, welche(s) auf konstruktiv einfache Weise eine zuverlässige Herstellung und Handhabung von Granulatkömem bzw. Granulatkömer-Tropfen aus einer niedrigviskosen Kunststoffschmelze ermöglicht, so dass einfach und zuverlässig für die Weiterverarbeitung geeignete Granulatkömer bereitgestellt werden können.

Diese Aufgabe wird erfindungsgemäß durch eine Vertropfungsvorrichtung mit den Merkmalen gemäß Anspruch 1 sowie ein Vertropfungsverfahren mit den Merkmalen gemäß Anspruch 18 gelöst. Bevorzugte Ausführungsformen der Erfindung sind in den jeweiligen Unteransprüchen definiert.

Die erfindungsgemäße Vertropfungsvorrichtung zum Herstellen von Granulatkömem aus einer niedrigviskosen Kunststoffschmelze weist auf:
eine Gießerdüse mit Bohrungen, wobei die Kunststoffschmelze in der Gießerdüse so mit einer harmonischen Druckschwingung beaufschlagbar ist, dass die dort aus den Bohrungen austretende Kunststoffschmelze einzelne Granulatkömer-Tropfen bildet,
einen Druckbehälter, in welchem ein Überdruck über Umgebungsdruck herrscht, zur Weiterbehandlung der Granulatkörner, mit
einer Fallstrecke (f) in einem Gasraum, welche die Granulatkömer-Tropfen durchfallen, und einer Kühlstrecke (k) mit einem Kühlfluid, in welches die Granulatkömer-Tropfen eintauchen, eine Austragsvorrichtung, mittels welcher die Granulatkömer aus dem Druckbehälter austragbar sind und der Überdruck abbaubar ist, und
eine Trennvorrichtung, mit welcher die Granulatkörner von dem Kühlfluid abtrennbar sind.

Bei der erfindungsgemäßen Vertropfungsvorrichtung ist dabei der Überdruck in dem Druckbehälter mindestens so hoch einstellbar wie der Dampfdruck der in der Kunststoffschmelze enthaltenen flüchtigen Stoffe. Ferner ist bei der erfindungsgemäßen Vertropfungsvorrichtung die Länge der Fallstrecke (f) im Gasraum so einstellbar, dass die einzelnen Granulatkömer-Tropfen mit kugelförmiger oder im Wesentlichen kugelförmiger Form formbar sind, bevor sie in das Kühlfluid eintauchen. Erfindungsgemäß ist des Weiteren eine Auffangvorrichtung nach der Fallstrecke (f) vorgesehen, insbesondere kompakt in dem Druckbehälter vorgesehen, so dass die fallenden Granulatkömer-Tropfen an dem Ort, an dem sie in das Kühlfluid eintauchen, eine möglichst geringe Relativgeschwindigkeit zum Kühlfluid aufweisen. Die erfindungsgemäße Vertropfungsvorrichtung weist auch zumindest eine Umwälzvorrichtung für das Kühlfluid auf, so dass die Granulatkömer nach der Beaufschlagung mit dem Kühlfluid vereinzelt und unverklumpt in dem Kühlfluid sind und gegebenenfalls vereinzelt und unverklumpt aus dem Druckbehälter austragbar sein können, wobei die Umwälzvorrichtung so gestaltet ist, dass damit Turbulenzen in dem Kühlfluid erzeugbar sind. Die flüchtigen Stoffe können insbesondere Wasser sein. Die erfindungsgemäße Vertropfungsvorrichtung kann auch noch nachgelagerte Förder- und Siliervorrichtungen für gekühlte und getrocknete Granulatkörner aufweisen.

Die erfindungsgemäße Vertropfungsvorrichtung bietet neben der Beaufschlagung mit Überdruck in dem Druckbehälter auch eine spezifische Auffangvorrichtung sowie eine spezifische Umwälzvorrichtung, und die Anordnung der Elemente erfolgt so, dass die Länge der Fallstrecke (f) in dem Gasraum und der Überdruck in dem Druckbehälter erfindungsgemäß spezifisch einstellbar sind. Von der Anmelderin ist gefunden worden, dass durch diese Kombination von Merkmalen erfindungsgemäß sicher und zuverlässig eine Vermeidung aller weiter oben angesprochenen Probleme des Standes der Technik erfolgen kann, wobei zuverlässig gut weiterverarbeitbare Granulatkörner bereitgestellt werden können. Die erfindungsgemäße Vertropfungsvorrichtung ist darüber hinaus auch relativ einfach in der Handhabung und flexibel einsetzbar.

Erfindungsgemäß kann die Umwälzvorrichtung innerhalb und/oder außerhalb des Druckbehälters angeordnet sein. Je nach zur Verfügung stehendem Raum und/oder zu vertropfendem niedrigviskosem Kunststoffschmelzematerial kann somit eine optimale Lösung zur Verhinderung der Verklumpungsproblematik gewählt werden. Insbesondere eine Anordnung einer Umwälzvorrichtung außerhalb des Druckbehälters kann die Service-Freundlichkeit erhöhen und die Komplexität der Gesamtvorrichtung verringern.

Die erfindungsgemäße Auffangvorrichtung kann in zwei Achsen verstellbar, bevorzugt zentrierbar, sein, so dass der Ort, an dem die Granulatkömer-Tropfen in das Kühlfluid eintauchen, einstellbar ist. Diese zwei Achsen sind bevorzugt horizontale Achsen. Somit kann erfindungsgemäß eine materialspezifische Einstellung besonders einfach vorgenommen werden, wobei die gesamte entsprechende Einstellvorrichtung bevorzugt innerhalb des Druckbehälters angeordnet ist und dort die Einstellbarkeit der Vorrichtung erfindungsgemäß bevorzugt gegeben ist.

Bevorzugt kann die Auffangvorrichtung als Kegelstumpf ausgebildet sein, durch dessen Inneres das Kühlfluid an seine Deckfläche geleitet ist und außen an seiner Mantelfläche abläuft. Eine solche Gestaltung ist besonders flexibel einsetzbar und konstruktiv relativ einfach zu ermöglichen. Dies hat insbesondere Vorteile gegenüber den bekannten Vorrichtungen des Standes der Technik, da erfindungsgemäß die Auffangvorrichtung im Inneren des Druckbehälters angeordnet ist und somit zwar von außen nicht ohne weiteres zugänglich ist, dies aber aufgrund der relativ einfachen Gestaltung auch nicht unbedingt erforderlich ist.

Die Auffangvorrichtung kann auch als Trichter ausgebildet sein, durch dessen Wandungsinneres bzw. durch dessen zweischichtige Wandung das Kühlfluid an seinen Trichterrand geleitet ist und innen an seiner Trichterfläche abläuft.

Es können zwei konzentrische Kreise von Bohrungen in der Gießerdüse erfindungsgemäß vorgesehen sein, und die Auffangvorrichtung kann aus einer Kombination von Kegelstumpf, zugeordnet dem inneren Kreis, und von Trichter, zugeordnet dem äußeren Kreis, gebildet sein. Somit kann ein hoher Durchsatz an zu vertropfendem Material der Kunststoffschmelze unter Verwendung konstruktiv einfacher Maßnahmen erreichbar sein.

Bevorzugt kann die Auffangvorrichtung erfindungsgemäß in der Neigung verstellbar sein bevorzugter kann der Winkel des Kegelstumpfs und/oder der Winkel des Trichters verstellbar sein und/oder der Kegelstumpf und/oder der Trichter können austauschbar sein, wobei Kegelstümpfe und/oder Trichter mit unterschiedlichen Neigungen/Winkeln vorgesehen sein können. Eine größtmögliche Flexibilität der erfindungsgemäßen Vorrichtung kann so verwirklichbar sein.

Um im besonderen Maße eine flexible Möglichkeit der Verringerung der Relativgeschwindigkeit am Ort des Auftreffens der Granulatkömer-Tropfen auf das Kühlfluid durch die geometrische Formgebung der entsprechenden Auffangvorrichtung gewährleisten zu können, insbesondere da ja in dem (abgeschlossenen) Druckbehälter keine unmittelbare Eingriffsmöglichkeit zur Veränderung der Geometrie gegeben ist, kann z.B. der Kegelstumpf und/oder der Trichter eine gekrümmte Mantelfläche bzw. Trichterfläche, bevorzugt in Form eines Ellipsoids, besonders bevorzugt konkav gekrümmt, aufweisen.

Um eine einfache Anpassbarkeit an unterschiedliche zu vertropfende Kunststoffschmelzematerialien erfindungsgemäß ermöglichen zu können, kann die Auffangvorrichtung höhenverstellbar sein, so dass die Länge der Fallstrecke (f) im Gasraum einstellbar ist.

Generell können die vielfältigen Verstellmöglichkeiten, welche erfindungsgemäß bevorzugt im Inneren des Druckbehälters vorgesehen sein können, und die bevorzugt einfache aber flexible Geometrie der Auffangvorrichtung eine bisher nicht bekannte Flexibilität und Zuverlässigkeit bei Vermeidung bisher auftretender Probleme bei der Vertropfung von Kunststoffschmelzematerialien zu Granulatkömer-Tropfen bzw. Granulatkömern ermöglichen.

Ein besonders zuverlässiges Vertropfen von niedrigviskoser Kunststoffschmelze unter Vermeidung der bekannten Ausgasungsproblematiken kann, wie gefunden wurde, erreicht werden mit einem Vertropfungskopf mit der Gießerdüse, welcher so vorgesehen ist, dass eine maximale Druckdifferenz zwischen dem Gasraum und einem Ausgleichsraum des Vertropfungskopfs < 5 bar, bevorzugt < 2 bar, beträgt.

Ferner wurde gefunden, dass es besonders günstig ist, wenn die erfindungsgemäße Vorrichtung so gestaltet ist, dass der Überdruck im Gasraum so einstellbar ist, dass er 0,5 bar über dem Dampfdruck der flüchtigen Stoffe, insbesondere des Wassers, in der niedrigviskosen Kunststoffschmelze liegt.

Auch wurde gefunden, dass der Druck in einem Vertropfungsraum des Vertropfungskopfs um mindestens 0,5 bar und höchstens 2 bar höher einstellbar sein sollte als der Überdruck im Gasraum.

Um eine Kontamination von Granulatkömer-Tropfen besonders zuverlässig vermeiden zu können, kann der Gasraum mit einem Inertgas, wie etwa Stickstoff oder ähnlichem, gefüllt sein.

Um die Weiterverarbeitbarkeit der mit der erfindungsgemäßen Vertropfungsvorrichtung erzeugbaren Granulatkörner besonders zu verbessern, sollte eine Frequenz der auf die Kunststoffschmelze überlagerten harmonischen Druckschwingung so zur Einstellung eines mittleren Durchmessers der Granulatkömer-Tropfen einstellbar sein, dass eine maximale Abweichung des Gewichts der Granulatkömer-Tropfen +/- 10 % beträgt.

Die Austragsvorrichtung zum Ausschleusen der Granulatkörner aus dem Druckbehälter kann Schleusen, Ventile, eine Impellerschleuse oder dergleichen aufweisen.

Generell kann die Trennvorrichtung erfindungsgemäß vor der Austragsvorrichtung oder umgekehrt angeordnet sein, so dass entweder bereits vom Kühlfluid abgetrennte Granulatkömer aus dem Druckbehälter austragbar sind oder Granulatkörner, die sich noch in dem Kühlfluid befinden.

Die erfindungsgemäße Vertropfungsvorrichtung kann einen mittels einer dafür vorgesehenen Einrichtung, bevorzugt eines Anfahrventils, zumindest beim Anfahren der Granulierung ausspülbaren Vertropfungskopf aufweisen, so dass eventuelle Verklumpungen der Kunststoffschmelze aufgrund eventuell (noch) nicht ausreichend temperierter Elemente der Vorrichtung abgeführt werden können. Damit wird ein besonders sicherer (Anfahr-)Betrieb der Vorrichtung ermöglicht.

Bei der erfindungsgemäßen Vertropfungsvorrichtung kann die niedrigviskose Kunststoffschmelze bevorzugt aus einem Polyamidmaterial und/oder einem thermoplastischen Polyestermaterial und/oder deren Vorprodukten und/oder deren Oligomeren bestehen.

Die erfindungsgemäße Vorrichtung ist auch zur Durchführung des erfindungsgemäßen Verfahrens geeignet.

Die im Zusammenhang mit der erfindungsgemäßen Vorrichtung angegebenen Merkmale und Vorteile gelten, soweit übertragbar/anwendbar, entsprechend auch für das erfindungsgemäße Verfahren und umgekehrt.

Die Erfindung wird im Folgenden beispielhaft anhand der beigefügten Zeichnungen näher erläutert werden. Es zeigt:
- Fig. 1: eine teilweise geschnittene schematische Seitenansicht einer Vertropfungsvorrichtung gemäß einer ersten bevorzugten Ausführungsform der vorliegenden Erfindung;
- Fig. 2: eine teilweise geschnittene schematische Seitenansicht einer Vertropfungsvorrichtung gemäß einer zweiten bevorzugten Ausführungsform der vorliegenden Erfindung;
- Fig. 3: eine vergrößerte Detailansicht aus Fig. 2;
- Fig. 4: eine schematische Ansicht einer Auffangvorrichtung für eine Vertropfungsvorrichtung gemäß der vorliegenden Erfindung;
- Fig. 5a: eine schematische Seitenansicht einer weiteren Auffangvorrichtung einer Vertropfungsvorrichtung gemäß der vorliegenden Erfindung; und
- Fig. 5b: eine Draufsicht auf die Auffangvorrichtung der Fig. 5a.

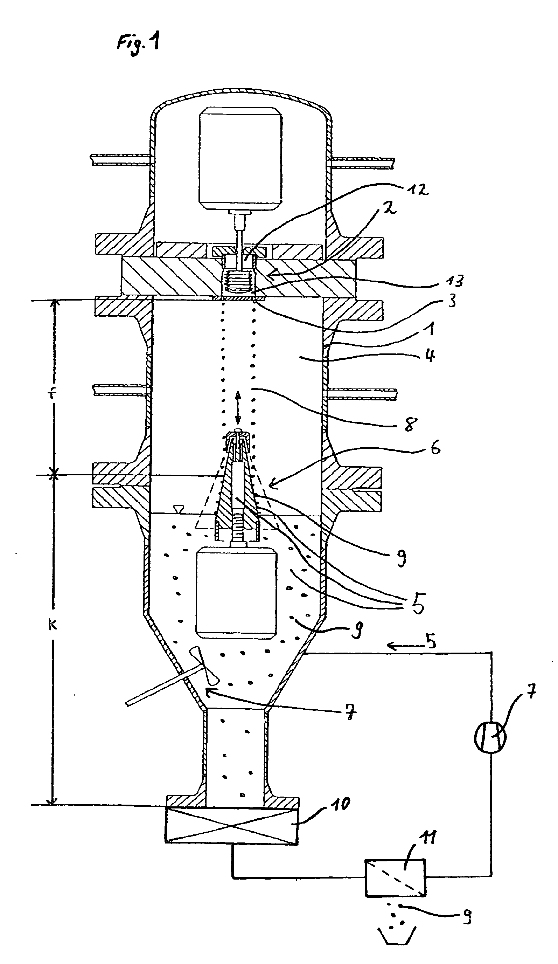

Figur 1 ist eine teilweise geschnittene schematische Seitenansicht einer Vertropfungsvorrichtung gemäß einer ersten bevorzugten Ausführungsform der vorliegenden Erfindung.

Die erfindungsgemäße Vertropfungsvorrichtung zum Herstellen von Granulatkömem 9 aus einer niedrigviskosen Kunststoffschmelze weist gemäß der in Fig. 1 gezeigten ersten bevorzugten Ausführungsform auf, einen Vertropfungskopf 2 mit einer Gießerdüse 3, welche Bohrungen aufweist, die bevorzugt ringförmig angeordnet sind, aber auch in anderer geeigneter Art und Weise z.B. sektorartig angeordnet sein können, wobei in der Gießerdüse 3 die Kunststoffschmelze so mit einer harmonischen Druckschwingung beaufschlagbar ist, dass die dort aus den Bohrungen austretende Kunststoffschmelze Granulatkömer-Tropfen 8 bildet. Der Vertropfungskopf weist einen Ausgleichsraum 12 und einen Vertropfungsraum 13 auf, welche jeweils einen bestimmten Innendruck aufweisen. Bevorzugt beträgt eine maximale Druckdifferenz zwischen einem Gasraum 4 in einem Druckbehälter 1 der Vertropfungsvorrichtung und dem Ausgleichsraum 12 des Vertropfungskopfs 2 weniger als 5 bar, bevorzugt weniger als 2 bar. Bevorzugt ist der Druck in dem Vertropfungsraum 13 des Vertropfungskopfs 2 um mindestens 0,5 bar und höchstens 2 bar höher einstellbar als ein Überdruck über Umgebungsdruck in dem Gasraum 4.

Die aus den Bohrungen der Gießerdüse 3 austretenden Granulatkömer-Tropfen 8 fallen in dem Gasraum 4 des Druckbehälters 1, in welchem ein Überdruck über Umgebungsdruck herrscht. In dem Druckbehälter vorgesehen sind eine Fallstrecke (f) in dem Gasraum 4 und eine Kühlstrecke (k) mit einem Kühlfluid 5, in welches die Granulatkömer-Tropfen 8 nach Durchfallen der Fallstrecke (f) eintauchen. Der Überdruck in dem Druckbehälter 1 ist erfindungsgemäß mindestens so hoch einstellbar wie der Dampfdruck der in der Kunststoffschmelze enthaltenen flüchtigen Stoffe, insbesondere wie der Dampfdruck des darin enthaltenen Wassers.

Nach Durchfallen der Fallstrecke (f) treffen die Granulatkömer-Tropfen 8 auf eine erfindungsgemäße Auffangvorrichtung 6 und tauchen dort in das Kühlfluid 5 so ein, dass die fallenden Granulatkömer-Tropfen 8 an dem Ort, an dem sie in das Kühlfluid 5 eintauchen, eine möglichst geringe Relativgeschwindigkeit zum Kühlfluid 5 aufweisen. Gemäß der in Fig. 1 gezeigten ersten bevorzugten Ausführungsform ist die Auffangvorrichtung 6 als Kegelstumpf ausgebildet, durch dessen Inneres das Kühlfluid 5 an seine Deckfläche geleitet ist und außen an seiner Mantelfläche abläuft. Diese Gestaltung ist erfindungsgemäß verhältnismäßig einfach, zumal die Auffangvorrichtung 6 ja in dem (zumindest beim Betrieb der Vorrichtung abgeschlossenen) Druckbehälter 1 abgeschottet angeordnet ist.

Die Granulatkömer-Tropfen 8 treten also nach Durchfallen der Fallstrecke (f) in das außen an der Mantelfläche ablaufende Kühlfluid 5 der kegelstumpfförmigen Auffangvorrichtung 6 ein. Gemäß der in Fig. 1 gezeigten bevorzugten ersten Ausführungsform der Erfindung befindet sich der untere Bereich der kegelstumpfförmigen Auffangvorrichtung 6 in einem Bad des Kühlfluids 5, und die Granulatkörner 9 werden von der Auffangvorrichtung 6 weiter nach unten in das Bad von Kühlfluid 5 in dem Kühlfluid geführt, welches an der Mantelfläche abläuft. Eine jeweilige Umwälzvorrichtung 7 für das Kühlfluid 5 ist gemäß der in Fig. 1 gezeigten ersten bevorzugten Ausführungsform der erfindungsgemäßen Vertropfungsvorrichtung sowohl innerhalb als auch außerhalb des Druckbehälters 1 (also gesamt zwei Umwälzvorrichtungen 7) so vorgesehen, dass die Granulatkörner 9 bzw. die Granulatkömer-Tropfen 8 nach der Beaufschlagung mit dem Kühlfluid 5 bzw. nach dem Eintauchen in das Kühlfluid 5 vereinzelt und unverklumpt in dem Kühlfluid 5 sind und aus dem Druckbehälter 1 austragbar sind, wobei durch die jeweilige Umwälzvorrichtung 7 Turbulenzen in dem Kühlfluid 5 erzeugbar sind. Es ist auch möglich_{,} dass nur im Innern des Druckbehälters 1 oder nur außerhalb des Druckbehälters 1 jeweils eine Umwälzvorrichtung 7 vorgesehen ist. Dies kann je nach geometrischen und/oder strömungstechnischen Gegebenheiten des Einzelfalls festgelegt sein, wobei dann erfindungsgemäß immer eine optimale Umwälzung im oben genannten Sinne erfolgen kann.

Als Umwälzvorrichtung 7 kann eine Umwälzpumpe oder ähnliches dienen. Bei einer außerhalb des Druckbehälters 1 angeordneten Umwälzvorrichtung 7 kann diese (wie in Fig. 1 auch gezeigt) über eine Kühlfluid-Zuführleitung mit dem Druckbehälter in Verbindung stehen.

Eine Austragsvorrichtung 10 ist vorgesehen, mittels welcher die Granulatkömer 9 aus dem Druckbehälter 1 austragbar sind und der Überdruck abbaubar ist, und es ist eine Trennvorrichtung 11 vorgesehen, mittels welcher die Granulatkömer 9 von dem Kühlfluid abtrennbar sind. Eventuelle nachgeordnete Förder- und/oder Siliereinrichtungen zur Lagerung bzw. Weiterverarbeitung der Granulatkörner 9, können vorgesehen sein.

Gemäß der in Fig. 1 gezeigten bevorzugten Ausführungsform der erfindungsgemäßen Vertropfungsvorrichtung werden die Granulatkörner 9 in dem Kühlfluid 5 über die Austragsvorrichtung 10 aus dem Druckbehälter 1 ausgetragen und erst dann mit der Trennvorrichtung 11 von dem Kühlfluid 5 getrennt, es kann jedoch auch der Fall sein (nicht dargestellt), dass die Granulatkömer 9 zunächst mit einer Trennvorrichtung 11 von dem Kühlfluid 5 abtrennbar sind und dann über eine Austragsvorrichtung 10 aus dem Druckbehälter 1 austragbar sind und gegebenenfalls der Überdruck abbaubar ist. Dies kann beispielsweise durch eine Zellenradschleuse oder ähnliches erfolgen.

Es sei noch angemerkt, dass der Gasraum 4 bevorzugt mit einem Inertgas, z.B. mit Stickstoff, gefüllt sein kann.

Die Kühlstrecke (k) wird gemäß der in Fig. 1 gezeigten ersten bevorzugten Ausführungsform der erfindungsgemäßen Vertropfungsvorrichtung entlang der Strecke vom Auftreffpunkt auf die Auffangvorrichtung 6, das Bad mit Kühlfluid 5 bis zum Fußbereich des Druckbehälters 1 gebildet.

Es sei angemerkt, dass die gesamte erfindungsgemäße Vertropfungsvorrichtung mit Fallstrecke (f) und Kühlstrecke (k) erfindungsgemäß in dem Druckbehälter 1 in senkrechter Anordnung untereinander vorgesehen sein kann, wodurch auch erfindungsgemäß der benötigte Raum - gerade im Hinblick auf die Anordnung mit bzw. in dem Druckbehälter 1 - möglichst kompakt und auch von den Abmessungen her einfach gehalten werden kann.

Die Auffangvorrichtung 6 kann in zwei Achsen verstellbar, bevorzugt arretierbar, sein, so dass der Ort, an dem die Granulatkömer-Tropfen in das Kühlfluid 5 eintauchen, einstellbar ist. Dabei erfolgt die Einstellung entlang der zwei waagrechten Raumachsen. Die gesamte Auffangvorrichtung 6 ist auch entlang der senkrechten Raumachse höhenverstellbar, wie dies auch durch den Doppelpfeil in Fig. 1 angedeutet ist. Auf diese Weise kann eine individuelle Anpassbarkeit an unterschiedliche Vertropfungsmaterialien und/oder eine Einstellbarkeit der Länge der Fallstrecke (f) im Gasraum 4 erfindungsgemäß einfach im Innern des Druckbehälters 1 vorgesehen sein, wobei die Länge der Fallstrecke (f) im Gasraum 4 so einstellbar ist, dass die einzelnen Granulatkömer-Tropfen 8 mit kugelförmiger oder im Wesentlichen kugelförmiger Form formbar sind, bevor sie in das Kühlfluid 5 eintauchen.

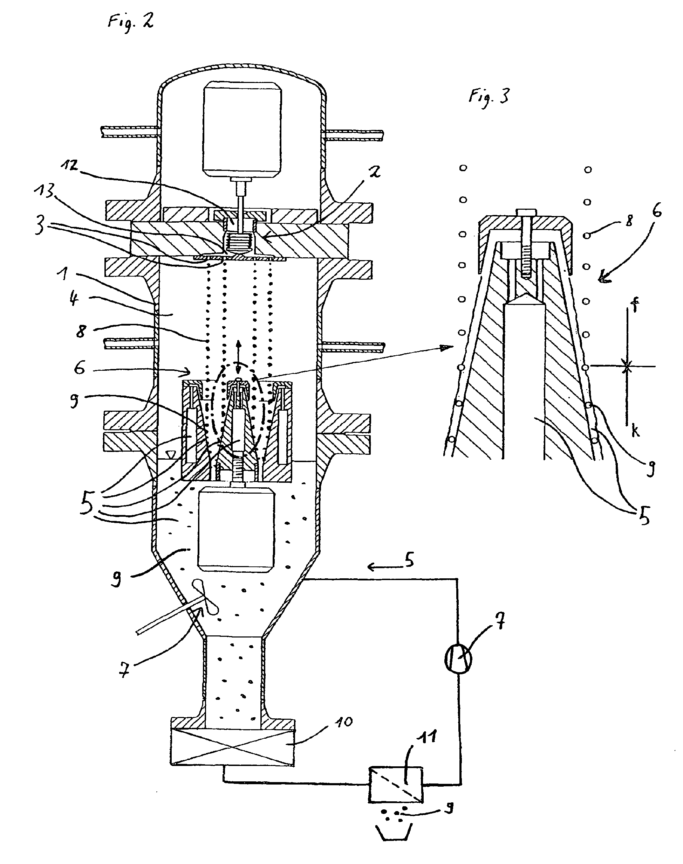

Die Fig. 2 zeigt in einer teilweise geschnittenen schematischen Seitenansicht eine erfindungsgemäße Vertropfungsvorrichtung gemäß einer zweiten bevorzugten Ausführungsform der vorliegenden Erfindung.

Dabei entsprechen, wie auch im Übrigen, gleiche Bezugszeichen in Fig. 2 gleichen Elementen, wie sie bereits in Fig. 1 beschrieben wurden. Die Ausführungsform gemäß Fig. 2 entspricht im Wesentlichen der Ausführungsform gemäß Fig. 1 und unterscheidet sich davon im Wesentlichen dadurch, dass zwei konzentrische Kreise oder zwei entsprechend angeordnete Abschnitte/Segmente von Bohrungen in der Gießerdüse 3 vorgesehen sind und die Auffangvorrichtung 6 aus einer Kombination von Kegelstumpf, zugeordnet dem inneren Kreis/Segment , und von Trichter, zugeordnet dem äußeren Kreis/Segment, gebildet ist. Es sei angemerkt, dass gegebenenfalls auch nur eine Auffangvorrichtung 6, welche als Kegelstumpf ausgebildet ist (siehe Fig. 1), vorgesehen sein kann und/oder nur eine Auffangvorrichtung 6, welche als Trichter ausgebildet ist, vorgesehen sein kann (diese Ausführungsform ist zwar nicht explizit gezeigt, ergibt sich aber, wenn in der Darstellung der Fig. 2 der innere Kegelstumpf und der innere Kreis weggelassen werden).

In dem Trichter der Auffangvorrichtung 6 gemäß Fig. 2 wird durch dessen Inneres das Kühlfluid 5 an seinen Trichterrand geleitet und läuft dann innen an seiner Trichterfläche ab.

Figur 3 zeigt schematisch ein vergrößertes Detail der Auffangvorrichtung 6 im Bereich des Kegelstumpfs der Fig. 2. Dabei ist gut zu sehen, wie die Granulatkömer-Tropfen 8 auf das Kühlfluid 5 auftreffen und in das Kühlfluid 5 eintauchen, nachdem sie die Fallstrecke (f) durchlaufen haben. Auch zu sehen ist, dass die Fallstrecke (f) ausreichend lang ist, so dass sich kugelförmige oder im Wesentlichen kugelförmige Granulatkömer-Tropfen 8 und somit auch Granulatkömer 9 ausbilden können. Das Kühlfluid 5 wird im Inneren der kegelstumpfförmigen Auffangvorrichtung 6 nach oben geführt, über eine Kappe, welche einen Spalt zwischen sich und der Mantelfläche des Kegelstumpfs definiert, umgelenkt und läuft dann an der Mantelfläche des Kegelstumpfs nach unten ab. Ähnlich gilt dies auch für den äußeren umlaufenden Trichter, welcher in Fig. 2 zu sehen ist, wobei durch dessen Inneres das Kühlfluid 5 an seinen Trichterrand geleitet wird und über eine umlaufende Kappe innen an seiner Trichterfläche abläuft. Dieses Detail ist jedoch in Fig. 3 nicht noch einmal explizit dargestellt.

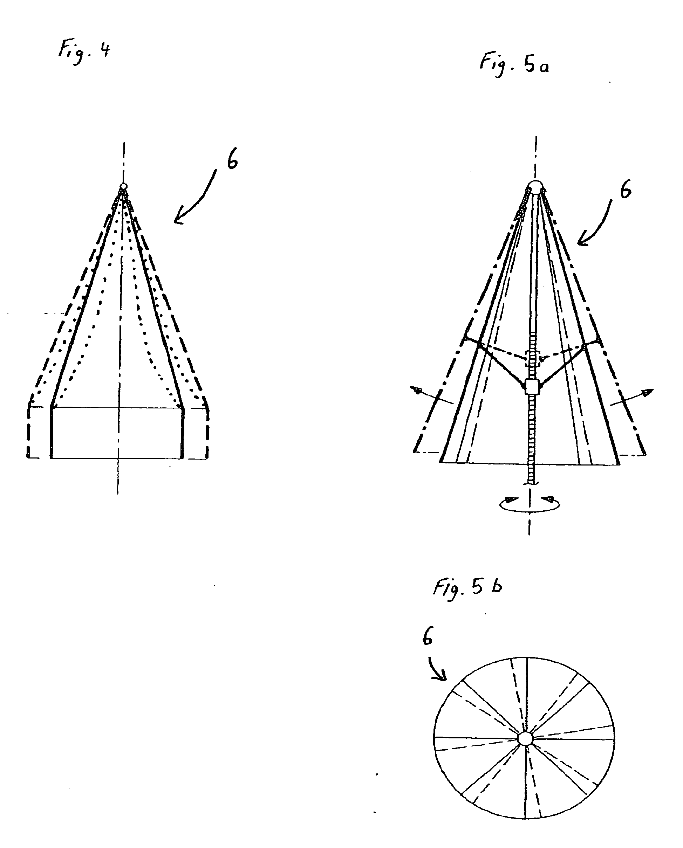

Figur 4 zeigt eine kegelstumpfförmige Auffangvorrichtung 6 der erfindungsgemäßen Vertropfungsvorrichtung, wobei unterschiedliche Winkel des Kegelstumpfs dargestellt sind. Ein Kegelstumpf mit spitzerem Winkel ist mit durchgezogener Linie gezeichnet, und ein Kegelstumpf mit stumpferem Kegelwinkel ist gestrichelt dargestellt.

Durch die Punktierung ist eine bevorzugte Ausführungsform der Auffangvorrichtung 6 gezeigt, bei welcher der Kegelstumpf eine gekrümmte Mantelfläche, in diesem Fall bevorzugt in Form eines Ellipsoids, besonders bevorzugt konkav gekrümmt, aufweist.

Ähnlich kann auch die innere Trichterfläche des Trichters der Auffangvorrichtung 6 (siehe auch Fig. 2) entsprechend angewinkelt und/oder gekrümmt sein, was in Fig. 4 jedoch nicht explizit gezeigt ist.

Figur 5a zeigt schematisch eine Ausführungsform der kegelstumpfförmigen Auffangvorrichtung 6, bei welcher über einen Schamiermechanismus im oberen Bereich des Kegelstumpfs die Mantelfläche des Kegelstumpfs und somit die Winkelstellung des Kegelstumpfs verstellbar sind.

Angelenkte Elemente können durch Verdrehen eines Gewindestabs und einer darauf laufenden Mutter über angelenkte Halterungen in der Winkelstellung veränderbar sein.

Figur 5b zeigt in Draufsicht die im Winkel verstellbare kegelstumpfförmige Auffangvorrichtung 6 der Fig. 5a.

Durchgezogen ist in den Fig. 5a und 5b jeweils die Stellung der kegelstumpfförmigen Auffangvorrichtung 6 mit spitzerem Winkel des Kegelstumpfs gezeigt. Die Stellung mit stumpferem Winkel ist jeweils strichpunktiert gezeigt.

Es sei angemerkt, dass die Einstellbarkeit einer als Trichter ausgeführten Auffangvorrichtung 6 ähnlich gestaltet sein kann wie im Fall einer in den Fig. 5a und 5b gezeigten kegelstumpfförmigen Auffangvorrichtung 6.

Mit der erfindungsgemäßen Vertropfungsvorrichtung ist auch das erfindungsgemäße Verfahren durchführbar.

## Patentansprüche

1. Vertropfungsvorrichtung zum Herstellen von Granulatkömem (9) aus einer niedrigviskosen Kunststoffschmelze, aufweisend:
- eine Gießerdüse (3) mit Bohrungen, in welcher die Kunststoffschmelze so mit einer harmonischen Druckschwingung beaufschlagbar ist, dass die dort aus den Bohrungen austretende Kunststoffschmelze Granulatkömer-Tropfen (8) bildet,
- einen Druckbehälter (1), in welchem ein Überdruck über Umgebungsdruck herrscht, mit
- einer Fallstrecke (f) in einem Gasraum (4) und
- einer Kühlstrecke (k) mit einem Kühlfluid (5), in welches die Granulatkömer-Tropfen (8) eintauchen,
- eine Austragsvorrichtung (10), mittels welcher die Granulatkömer (9) aus dem Druckbehälter (1) austragbar sind und der Überdruck abbaubar ist, und
- eine Trennvorrichtung (11), mit welcher die Granulatkömer (9) von dem Kühlfluid (5) abtrennbar sind, und
- der Überdruck in dem Druckbehälter (1) mindestens so hoch einstellbar ist wie der Dampfdruck der in der Kunststoffschmelze enthaltenen flüchtigen Stoffe, und
**dadurch gekennzeichnet, dass**
- die Länge der Fallstrecke (f) im Gasraum (4) so einstellbar ist, dass die einzelnen Granulatkömer-Tropfen (8) mit kugelförmiger oder im Wesentlichen kugelförmiger Form formbar sind, bevor sie in das Kühlfluid (5) eintauchen,
- eine Auffangvorrichtung (6) in dem Druckbehälter (1) nach der Fallstrecke (f) vorgesehen ist, so dass die fallenden Granulatkömer-Tropfen (8) an dem Ort, an dem sie in das Kühlfluid (5) eintauchen, eine möglichst geringe Relativgeschwindigkeit zum Kühlfluid (5) aufweisen, und
- zumindest eine Umwälzvorrichtung (7) für das Kühlfluid (5) vorgesehen ist, so dass die Granulatkömer (9) nach der Beaufschlagung mit dem Kühlfluid (5) vereinzelt und unverklumpt in dem Kühlfluid (5) sind, wobei durch die Umwälzvorrichtung (7) Turbulenzen in dem Kühlfluid (5) erzeugbar sind.

2. Vorrichtung nach Anspruch 1, **dadurch gekennzeichnet, dass** die Umwälzvorrichtung (7) innerhalb und/oder außerhalb des Druckbehälters (1) angeordnet ist.

3. Vorrichtung nach Anspruch 1 oder 2, **dadurch gekennzeichnet, dass** die Auffangvorrichtung (6) in zwei Achsen verstellbar, bevorzugt zentrierbar, ist, so dass der Ort, an dem die Granulatkörner-Tropfen (8) in das Kühlfluid (5) eintauchen, einstellbar ist.

4. Vorrichtung nach einem der Ansprüche 1 bis 3, **dadurch gekennzeichnet, dass** die Auffangvorrichtung (6) als Kegelstumpf ausgebildet ist, durch dessen Inneres das Kühlfluid (5) an seine Deckfläche geleitet ist und außen an seiner Mantelfläche abläuft.

5. Vorrichtung nach einem der Ansprüche 1 bis 3, **dadurch gekennzeichnet, dass** die Auffangvorrichtung (6) als Trichter ausgebildet ist, durch dessen Inneres das Kühlfluid (5) an seinen Trichterrand geleitet ist und innen an seiner Trichterfläche abläuft.

6. Vorrichtung nach einem der Ansprüche 1 bis 5, **dadurch gekennzeichnet, dass** zwei konzentrische Kreise von Bohrungen in der Gießerdüse (3) vorgesehen sind und die Auffangvorrichtung (6) aus einer Kombination von Kegelstumpf, zugeordnet dem inneren Kreis, und von Trichter, zugeordnet dem äußeren Kreis, gebildet ist.

7. Vorrichtung nach einem der vorhergehenden Ansprüche, **dadurch gekennzeichnet, dass** die Auffangvorrichtung (6) in der Neigung verstellbar ist, bevorzugt der Winkel des Kegelstumpfs und/oder der Winkel des Trichters verstellbar ist und/oder der Kegelstumpf und/oder der Trichter austauschbar ist, wobei Kegelstümpfe und/oder Trichter mit unterschiedlichen Neigungen/Winkeln vorgesehen sind.

8. Vorrichtung nach einem der vorhergehenden Ansprüche, **dadurch gekennzeichnet, dass** der Kegelstumpf und/oder der Trichter eine gekrümmte Mantelfläche bzw. Trichterfläche, bevorzugt in Form eines Ellipsoids, besonders bevorzugt konkav gekrümmt, aufweist.

9. Vorrichtung nach einem der vorhergehenden Ansprüche, **dadurch gekennzeichnet, dass** die Auffangvorrichtung (6) höhenverstellbar ist, so dass die Länge der Fallstrecke (f) im Gasraum (4) einstellbar ist.

10. Vorrichtung nach einem der Ansprüche 1 bis 9, **dadurch gekennzeichnet, dass** ein Vertropfungskopf (2) mit der Gießerdüse (3) vorgesehen ist, so dass eine maximale Druckdifferenz zwischen dem Gasraum (4) und einem Ausgleichsraum (12) des Vertropfungskopfs (2) < 5 bar, bevorzugt < 2 bar, beträgt.

11. Vorrichtung nach Anspruch 10, **dadurch gekennzeichnet, dass** der Überdruck im Gasraum (4) 0,5 bar über dem Dampfdruck der flüchtigen Stoffe in der Kunststoffschmelze beträgt.

12. Vorrichtung nach Anspruch 10 oder 11, **dadurch gekennzeichnet, dass** der Druck in einem Vertropfungsraum (13) des Vertropfungskopfs (2) um mindestens 0,5 bar und höchstens 2 bar höher einstellbar ist als der Überdruck im Gasraum (4).

13. Vorrichtung nach einem der vorhergehenden Ansprüche, **dadurch gekennzeichnet, dass** der Gasraum (4) mit einem Inertgas gefüllt ist.

14. Vorrichtung nach einem der vorhergehenden Ansprüche, **dadurch gekennzeichnet, dass** die Frequenz der auf die Kunststoffschmelze überlagerten Druckschwingung zur Einstellung eines mittleren Durchmessers der Granulatkörner-Tropfen (8) so einstellbar ist, dass eine maximale Abweichung des Gewichts der Granulatkömer-Tropfen (8) +/- 10 % ist.

15. Vorrichtung nach einem der vorhergehenden Ansprüche, **dadurch gekennzeichnet, dass** die Austragsvorrichtung (10) zum Ausschleusen der Granulatkörner (9) aus dem Druckbehälter (1) Schleusen, Ventile, eine Impellerschleuse oder dergleichen aufweist.

16. Vorrichtung nach einem der vorhergehenden Ansprüche, **dadurch gekennzeichnet, dass** mittels einer dafür vorgesehenen Einrichtung, bevorzugt eines Anfahrventils, zumindest beim Anfahren der Granulierung der Vertropfungskopf ausspülbar ist.

17. Vorrichtung nach einem der vorhergehenden Ansprüche, **dadurch gekennzeichnet, dass** die niedrigviskose Kunststoffschmelze aus einem Polyamidmaterial und/oder einem thermoplastischen Polyestermaterial und/oder deren Vorprodukten und/oder deren Oligomeren besteht.

18. Verfahren zum Herstellen von Granulatkömern durch Vertropfen einer niedrigviskosen Kunststoffschmelze, enthaltend die Arbeitsschritte:
a. Austragen mindestens eines Schmelzestrahls, dem eine harmonische Druckschwingung überlagert wird, in einen Druckbehälter durch eine Gießerdüse mit Bohrungen,
b. Ausbilden von Granulatkömer-Tropfen in einer Fallstrecke,
c. Eintauchen der Granulatkömer-Tropfen in ein Kühlfluid,
d. Trennen der gekühlten und verfestigten Granulatkömer vom Kühlfluid,
wobei der Druck im Druckbehälter zur Vertropfung mindestens dem Dampfdruck der in der Kunststoffschmelze enthaltenen flüchtigen Stoffe entspricht und
**dadurch gekennzeichnet dass**,
- der Durchmesser der Bohrungen, die Frequenz der auf die Kunststoffschmelze überlagerten Druckschwingung und die Fallhöhe im Druckbehälter so eingestellt und aufeinander abgestimmt werden, dass der Schmelzestrahl in einzelne Granulatkömer-Tropfen zerfällt und kugelförmige oder im Wesentlichen kugelförmige Granulatkömer-Tropfen ausgebildet werden, und
- ein mittlerer Durchmesser der Granulatkömer-Tropfen durch die Frequenz der überlagerten harmonischen Schwingung eingestellt wird,
- eine Auffangvorrichtung in dem Druckbehälter so vorgesehen wird, dass dort am Ort des Eintritts der Granulatkömer-Tropfen in das Kühlfluid die Relativgeschwindigkeit zwischen den fallenden Granulatkömer-Tropfen und dem Kühlfluid so gering wie möglich gehalten wird, und
- zumindest eine Umwälzvorrichtung für das Kühlfluid so vorgesehen wird, dass damit Turbulenzen in dem Kühlfluid erzeugt werden, so dass die Granulatkörner nach der Beaufschlagung mit dem Kühlfluid vereinzelt und unverklumpt in dem Kühlfluid sind.

## Claims

1. Drop pelletizing device for producing pellets (9) from a low-viscosity plastic melt, having:
- a die plate (3) with holes, in which the plastic melt can be subjected to a harmonic pressure oscillation such that the plastic melt emerging from the holes forms individual pellet droplets (8),
- a pressure vessel (1), in which prevails an overpressure above the ambient pressure, which pressure vessel has
- a drop section (f) in a gas space (4) and has
- a cooling section (k) with a coolant (5) into which the pellet droplets (8) plunge,
- a discharge device (10), by means of which the pellets (9) can be discharged from the pressure vessel (1) and the overpressure can be reduced, and
- a separator (11) with which the pellets (9) can be separated from the coolant (5), and
- the overpressure in the pressure vessel (1) can be set at least as high as the vapor pressure of the volatile substances contained in the plastic melt, and **characterized in that**
- the length of the drop section (f) in the gas space (4) can be set such that the individual pellet droplets (8) can be shaped with a spherical or essentially spherical shape before they plunge into the coolant (5),
- a collecting device (6) is provided in the pressure vessel (1) after the drop section (f), so that the falling pellet droplets (8) have the lowest possible velocity relative to the coolant (5) at the location where they plunge into the coolant (5), and
- at least one circulating device (7) is provided for the coolant (5), so that the pellets (9) are separated and non-clumped in the coolant (5) after exposure to the coolant (5), wherein turbulence in the coolant (7) can be produced by the circulating device (5).

2. Device according to claim 1, **characterized in that** the circulating device (7) is located inside and/or outside the pressure vessel (1).

3. Device according to claim 1 or 2, **characterized in that** the collecting device (6) is adjustable in two axes, preferably can be centered, so that the location where the pellet droplets (8) plunge into the coolant (5) is adjustable.

4. Device according to any one of claims 1 through 3, **characterized in that** the collecting device (6) is designed as a truncated cone, with the coolant (5) being directed through the interior thereof to its top surface and flowing down its lateral surface on the outside.

5. Device according to any one of claims 1 through 3, **characterized in that** the collecting device (6) is designed as a funnel, with the coolant (5) being directed through its interior to the funnel rim, and flowing down its funnel surface on the inside.

6. Device according to any one of claims 1 through 5, **characterized in that** two concentric circles of holes are provided in the die plate (3), and the collecting device (6) is composed of a combination of a truncated cone associated with the inner circle, and of a funnel associated with the outer circle.

7. Device according to any one of the preceding claims, **characterized in that** the collecting device (6) is adjustable in inclination, preferably the angle of the truncated cone and/or the angle of the funnel is adjustable and/or the truncated cone and/or the funnel is replaceable, wherein truncated cones and/or funnels with different inclinations/angles are provided.

8. Device according to any one of the preceding claims, **characterized in that** the truncated cone and/or the funnel has a curved lateral surface or funnel surface, preferably in the shape of an ellipsoid, especially preferably with concave curvature.

9. Device according to any one of the preceding claims, **characterized in that** the collecting device (6) is adjustable in height, so that the length of the drop section (f) in the gas space (4) is adjustable.

10. Device according to any one of claims 1 through 9, **characterized in that** a drop pelletizing head (2) is provided with the die plate (3) such that a maximum pressure difference between the gas space (4) and an equalizing chamber (12) of the drop pelletizing head (2) is < 5 bar, preferably < 2 bar.

11. Device according to claim 10, **characterized in that** the overpressure in the gas space (4) is 0.5 bar above the vapor pressure of the volatile substances in the plastic melt.

12. Device according to claim 10 or 11, **characterized in that** the pressure in a drop forming space (13) of the drop pelletizing head (2) is adjustable to at least 0.5 bar and at most 2 bar above the overpressure in the gas space (4).

13. Device according to any one of the preceding claims, **characterized in that** the gas space (4) is filled with an inert gas.

14. Device according to any one of the preceding claims, **characterized in that** the frequency of the pressure oscillation imposed on the plastic melt to establish an average diameter of the pellet droplets (8) is adjustable such that a maximum deviation of the weight of the pellet droplets (8) is +/- 10%.

15. Device according to any one of the preceding claims, **characterized in that** the discharge device (10) for extracting the pellets (9) from the pressure vessel (1) has locks, valves, an impeller lock, or the like.

16. Device according to any one of the preceding claims, **characterized in that** the pelletizing head can be flushed, at least during start-up of pelletizing, by means of a device provided for this purpose, preferably a start-up valve.

17. Device according to any one of the preceding claims, **characterized in that** the low-viscosity plastic melt consists of a polyamide material and/or a thermoplastic polyester material and/or their precursors and/or their oligomers.

18. Method for producing pellets by drop pelletizing a low-viscosity plastic melt, comprising the process steps:
a. discharging of at least one melt stream, onto which a harmonic pressure oscillation is imposed, into a pressure vessel through a die plate with holes,
b. formation of pellet droplets in a drop section,
c. plunging of the pellet droplets into a coolant,
d. separation of the cooled and solidified pellets from the coolant,
wherein the pressure in the pressure vessel for drop pelletizing corresponds to at least the vapor pressure of the volatile substances contained in the plastic melt, and
**characterized in that**
- the diameter of the holes, the frequency of the pressure oscillation imposed on the plastic melt, and the drop height in the pressure vessel are adjusted and matched to one another such that the melt stream breaks up into individual pellet droplets and spherical or essentially spherical pellet droplets are formed, and
- an average diameter of the pellet droplets is set by the frequency of the imposed harmonic oscillation,
- a collecting device is provided in the pressure vessel in such a manner that the velocity of the falling pellet droplets relative to the coolant at the location where the pellet droplets enter the coolant is kept as low as possible, and
- at least one circulating device for the coolant is provided such that turbulence can be produced thereby in the coolant so that the pellets are separated and non-clumped in the coolant after exposure to the coolant.

## Revendications

1. Dispositif de formation de gouttelettes pour la fabrication de granulés (9) à partir de plastique fondu de faible viscosité présentant :
- une buse verseuse (3) avec des perforations dans laquelle le plastique fondu est soumis à une oscillation de pression harmonique de telle sorte que le plastique fondu sortant des perforations forme des gouttelettes de granulés (8),
- un réservoir sous pression (1) dans laquelle règne une surpression par rapport à la pression ambiante, avec
- une chute libre (f) dans un espace gazeux (4) et
- un parcours de refroidissement (k) rempli d'un liquide de refroidissement (5), dans lequel les gouttelettes de granulés (8) sont immergées
- un dispositif d'évacuation (10) au moyen duquel les granulés (9) sont évacués du réservoir sous pression et la surpression est éliminée
- un dispositif de séparation (11) au moyen duquel les granulés (9) peuvent être séparés du liquide de refroidissement (5)
- la surpression du réservoir sous pression (1) peut être réglée au moins à la valeur correspondant à la pression vapeur des substances volatiles contenues dans le plastique fondu
**caractérisé en ce que**
- la longueur de la chute libre (f) dans l'espace gazeux (4) est réglable de telle façon que les différentes gouttelettes de granulés (8) peuvent prendre une forme sphérique ou sensiblement sphérique avant d'être immergées dans le liquide de refroidissement (5),
- un dispositif de réception (6) est prévu dans le réservoir sous pression (1) en aval de la chute libre (f) de sorte que les gouttelettes de granulés (8) incidentes présentent la vitesse relative la plus faible possible par rapport au liquide de refroidissement (5) à l'endroit où elles s'immergent dans le liquide de refroidissement (5) et
- au moins un dispositif de circulation (7) est prévu pour le liquide de refroidissement (5), de sorte que les granulés (9) après être entrés en contact avec le liquide de refroidissement (5) sont individualisés et non agglomérés dans le liquide de refroidissement (5), des turbulences pouvant être générées dans le liquide de refroidissement (5) au moyen du dispositif de circulation (7).

2. Dispositif selon la revendication 1, **caractérisé en ce que** le dispositif de circulation (7) est agencé à l'intérieur et/ou à l'extérieur du réservoir sous pression (1).

3. Dispositif selon la revendication 1 ou 2, **caractérisé en ce que** le dispositif de réception (6) est réglable sur deux axes, de préférence centrable, de sorte que l'endroit où les gouttelettes de granulés (8) sont immergées dans le liquide de refroidissement (5), est réglable.

4. Dispositif selon la revendication 1 à 3, **caractérisé en ce que** le dispositif de réception (6) a la forme d'un cône tronqué, le liquide de refroidissement étant conduit à l'intérieur sur sa surface de couverture et à l'extérieur sur son enveloppe.

5. Dispositif selon la revendication 1 à 3, **caractérisé en ce que** le dispositif de réception (6) a la forme d'une trémie, le liquide de refroidissement étant conduit à l'intérieur sur les bords de la trémie et à l'intérieur sur la paroi de la trémie.

6. Dispositif selon la revendication 1 à 5, **caractérisé en ce que** deux cercles concentriques de perforations sont prévus dans la buse verseuse (3) et que le dispositif de réception (6) est formé par une combinaison de cône tronqué, affecté au cercle intérieur et de la trémie affectée au cercle extérieur.

7. Dispositif selon une des revendications précédentes **caractérisé en ce que** le dispositif de réception (6) est réglable en inclinaison, de préférence l'angle du cône tronqué et/ou l'angle de la trémie est réglable, et/ou le cône tronqué et/ou la trémie est interchangeable, des cônes tronqués et/ou des trémies présentant des inclinaisons/angles différents étant prévus.

8. Dispositif selon une des revendications précédentes **caractérisé en ce que** le cône tronqué et/ou la trémie présente une enveloppe ou une surface de trémie courbe, de préférence de forme ellipsoïdale, de manière plus préférée de forme concave.

9. Dispositif selon une des revendications précédentes **caractérisé en ce que** le dispositif de réception (6) est réglable en hauteur, de sorte que la longueur de la chute libre (f) dans l'espace gazeux (4) est réglable.

10. Dispositif selon une des revendications 1 à 9 **caractérisé en ce qu'**une tête d'égouttage (2) munie d'une buse verseuse (3) est prévue de sorte que la différence de pression maximale entre l'espace gazeux (4) et un compartiment de compensation (12) de la tête d'égouttage (2) est < 5 bars, de préférence < 2 bars.

11. Dispositif selon la revendication 10, **caractérisé en ce que** la surpression dans l'espace gazeux (4) est supérieure de 0,5 bar à la pression vapeur des substances volatiles du plastique fondu.

12. Dispositif selon une des revendications 10 à 11 **caractérisé en ce que** la pression dans un compartiment d'égouttage (13) de la tête d'égouttage (2) peut être réglée à au moins 0,5 bar et au maximum 2 bars de plus que la surpression dans l'espace gazeux (4).

13. Dispositif selon une des revendications précédentes **caractérisé en ce que** l'espace gazeux (4) est rempli d'un gaz inerte.

14. Dispositif selon une des revendications précédentes **caractérisé en ce que** la fréquence de l'oscillation superposée au plastique fondu en vue du réglage d'un diamètre moyen des gouttelettes de granulés (8) est réglable de sorte que l'écart maximal de poids des gouttelettes de granulés (8) est de +/- 10%.

15. Dispositif selon une des revendications précédentes **caractérisé en ce que** le dispositif d'évacuation (10) pour expulser les granulés (9) du réservoir sous pression (1) comporte des sas, soupapes, un sas de roue à aubes ou des éléments analogues.

16. Dispositif selon une des revendications précédentes **caractérisé en ce qu'**au moyen d'un dispositif prévu à cet effet, de préférence une soupape de démarrage, la tête d'égouttage peut être rincée, au moins lors du démarrage de la granulation.

17. Dispositif selon une des revendications précédentes **caractérisé en ce que** le plastique fondu de faible viscosité est un polyamide et/ou un polyester thermoplastique et/ou leurs précurseurs et/ou leurs oligomères.

18. Procédé pour la fabrication de granulés par égouttage d'un plastique fondu de faible viscosité comprenant les étapes suivantes :
a. évacuation d'au moins une veine de plastique fondu à laquelle est superposée une oscillation de pression harmonique dans un réservoir sous pression par une buse verseuse avec des perforations,
b. formation de gouttelettes de granulés en chute libre
c. immersion des gouttelettes de granulés dans un liquide de refroidissement
d. séparation des granulés refroidis et solidifiés du liquide de refroidissement,
la pression régnant à l'intérieur du réservoir sous pression en vue de l'égouttage correspondant au moins à la pression vapeur des substances volatiles contenues dans le plastique fondu
**caractérisé en ce que**
- le diamètre des perforations, la fréquence de l'oscillation superposée au plastique fondu et la chute libre dans le réservoir sous pression sont réglés et ajustés entre eux de sorte que la veine de plastique fondu se décompose en différentes gouttelettes de granulés et des gouttelettes de granulés de forme sphérique ou sensiblement sphérique sont formées,
et
- un diamètre moyen des gouttelettes de granulés est réglé au moyen de la fréquence de l'oscillation harmonique superposée
- un dispositif de réception est prévu dans le réservoir sous pression de sorte qu'à l'endroit où les gouttelettes de granulés pénètrent dans le liquide de refroidissement, la vitesse relative entre les gouttelettes de granulés incidentes et le liquide de refroidissement est maintenue à une valeur aussi faible que possible et
- au moins un dispositif de circulation est prévu pour le liquide de refroidissement de sorte que des turbulences sont ainsi générées dans le liquide de refroidissement de sorte que les granulés après être entrés en contact avec le liquide de refroidissement sont individualisés et non agglomérés dans le liquide de refroidissement.
